# EUROPÄISCHE PATENTANMELDUNG

(11) **EP 4 215 334 A1**
(43) Veröffentlichungstag der Anmeldung: **26.07.2023**
(21) Anmeldenummer: 23151834.1
(22) Anmeldetag: 16.01.2023
(51) Int. Cl.: B29C 45/06, B29C 45/17

(54) **SPRITZGIESSVORRICHTUNG MIT EINEM DREHTELLER**

(30) Priorität: 25.01.2022 DE 102022101723
(71) Anmelder: Braunform GmbH, 79353 Bahlingen (DE)
(72) Erfinder: SEEBACHER, Georg Franz, 79350 Sexau (DE); WASMUTH, Gerd, 79288 Gottenheim (DE)
(74) Vertreter: Kleine, Hubertus

(57) **Zusammenfassung**

Spritzgießvorrichtung (100) mit einem Drehteller (1), einem festen und einem beweglichen Werkzeugteil (2.1 und 2.3), wobei der Drehteller (1) und das bewegliche Werkzeugteil (2.3) als bewegliche Baugruppe (400) gegenüber dem festen Werkzeugteil (2.1) verfahrbar, insbesondere linear verfahrbar, ausgebildet ist, wobei der Drehteller (1) zudem eine Grundplatte (1.5) aufweist, und wobei der Drehteller (1) eine Drehplatte (1.1) aufweist, welche gegenüber der Grundplatte (1.5), über eine Welle (1.7) wirkverbunden und drehbar gelagert ist und wobei die Länge der Welle (1.7) kürzer ist als die Stärke von Grund- und Drehplatte (1.5 und 1.1) zusammen, wobei der Drehteller (1) eine Vorrichtung zur Temperiermittelübergabe zwischen der Drehplatte (1.1) und der Grundplatte (1.5) aufweist, welche die Abmessungen des Drehtellers (1) nicht überragt und wobei die Vorrichtung zur Temperiermittelübergabe die Welle (1.7) und eine Lagerbuchse (1.9) umfasst.

## Beschreibung

Die vorliegende Erfindung betrifft eine Spritzgießvorrichtung mit einem Drehteller nach dem Oberbegriff des Anspruchs 1.

Die 200 177 37 U1 offenbart ein Werkzeug mit als Werkzeughälften ausgebildete Werkzeugelemente sowie einen Drehteller mit einer stabartig ausgebildeten Welle, welche aus der Grundplatte hervorsteht. Der Aufbau dieses Werkzeugs hat sich grundsätzlich bewährt, allerdings gibt es ein Bestreben nach einem kompakteren Aufbau bei gleichzeitiger optimaler Temperierung des Werkzeugs insbesondere im Bereich der Kavitäten.

Ein weiterer Aspekt ist die Temperierung des Werkzeugs. In vielen Ausführungen ist das Werkzeug nur mit Außenschläuchen temperierbar. Hier sind alternierende Drehbewegungen notwendig, da die Schlauchverbindung andernfalls dynamisch belastet wird und Undichtigkeiten auftreten.

Im Fall der DE 200 177 37 U1 wurde zur Lagerung des Drehtellers eine mit zwei Kugellagerung gewählt. Bei dieser Variante besteht die Gefahr, dass sich die zentrale Welle bei dieser "zwei Punkt-Lagerung" biegen würde. Bei Hinzunahme einer Temperierübergabe zwischen Grundplatte und Drehplatte würde sich an den Passflächen von Welle zu Dichtmittel bzw. Buchse zudem ein Verschleiß abzeichnen.

Ausgehend vom vorgenannten Stand der Technik und der vorgenannten Argumentation ist es Aufgabe der vorliegenden Erfindung eine Spritzgießvorrichtung mit vergleichbarer Funktionalität bei gleichzeitig kompakterem Aufbau zu realisieren.

Die vorliegende Erfindung löst diese Aufgabe durch eine Spritzgießvorrichtung mit den Merkmalen des Anspruchs 1.

Eine erfindungsgemäße Spritzgießvorrichtung dient als Bauteil zum Spritzgießen von Kunststoffteilen, insbesondere für den Mehrkomponenten-Spritzguss.

Die Spritzgießvorrichtung weist ein erstes bewegliches, insbesondere linear bewegliches, Werkzeugteil mit zumindest zwei Formeinsätzen mit jeweils mindestens einer Kavität zur Ausbildung eines Hohlraums in Form eines Spritzgießlings gemeinsam mit einem zweiten festen Werkzeugteil auf. Die Werkzeugteile können beispielsweise als bewegliche Auswerferseite und als feststehende Düsenseite eines Werkzeugs ausgebildet sein.

Das bewegliche Werkzeugteil und zumindest ein Drehteller mit einer drehbar um eine Rotationsachse A gelagerte Drehplatte bilden eine bewegliche Baugruppe.

Weiter weist der Drehteller eine Grundplatte auf. Gegenüber dieser Grundplatte ist die Drehplatte drehbar gelagert. Die Formeinsätze des beweglichen Werkzeugteils sind fest, insbesondere mittelbar über einen Formrahmen mit der Drehplatte verbunden.

Erfindungsgemäß ist die Drehplatte gegenüber der Grundplatte, über eine Welle wirkverbunden und mittels einer Lagerbuchse drehbar gelagert.

Die Länge der Welle ist dabei kürzer ist als die Stärke bzw. Dicke von Grund- und Drehplatte zusammen.

Der Drehteller weist zudem eine Vorrichtung zur Temperiermittelübergabe zwischen der Drehplatte und der Grundplatte auf, welche die Abmessungen des Drehtellers nicht überragt.

Die Vorrichtung zur Temperiermittelübergabe umfasst zumindest die Welle und die Lagerbuchse.

Durch die geringe Erstreckung der Vorrichtung zur Temperiermittelübergabe wird ein kompakter Aufbau erreicht, sowie eine Möglichkeit zur Integration weiterer Funktionalitäten, wie z.B. eine Temperierung bzw. Kühlung im Bereich der rotierenden Elemente. Dadurch wird eine vereinfachte Bedienung und verringerte Zykluszeiten erreicht.

Der Vorteil der vorliegenden Lösung besteht u.a. in einem geringeren Verschleiß und einer besseren Dichtung bei Realisierung einer internen Temperiermittelübergabe, also von der Grundplatte zur Drehplatte hin.

Darüber hinaus ist ein Durchdrehen des Drehtellers möglich, was einen Zykluszeitvorteil bei drei oder vier Stationen-Prozess mit mehreren verschiedenen Kavitäten gibt. So z.B. eine Anordnung aus drei voneinander verschiedenen Kavitäten im Drehwinkel von 120° oder von vier voneinander verschiedenen Kavitäten im Drehwinkel von 90°. So lassen sich in einem mehrstufigen Prozess bei Durchlaufen der einzelnen Stationen eine komplizierte Spritzgussform, insbesondere auch durch Mehrkomponenten-Spritzguss, kurze Drehzeiten durch Verringerung der Drehwinkels realisieren.

Weiterhin kann eine direkte Lagerung des Drehtellers erfolgen, wobei eine Zentrierung der Drehplatte zur Grundplatte zusätzlich die Präzision erhöht.

Ein geringer Verschleiß an den Pass- und Dichtflächen zwischen Welle und Buchse wird zudem gewährleistet.

Weitere vorteilhafte Ausgestaltungen der Erfindung sind Gegenstand der Unteransprüche.

Vorteilhaft kann die vorgenannte Lagerbuchse als eine mit der Drehplatte mitdrehende Lagerbuchse ausgebildet sein. In einer vorteilhaften Variante der vorliegenden Erfindung kann die Welle drehfest mit der Grundplatte verbunden sein.

Vorzugsweise kann die Bereitstellung eines neuen Lagerungssystem dafür zudem dafür sorgen, dass das Dichtungssystem bei einer Temperierung nicht mit statischen oder dynamischen Betriebskräften oder Biegebelastungen beaufschlagt wird. Außerdem wird die Toleranzkette kleiner und die Präzision somit höher. Dabei wird vorteilhaft im Rahmen der vorliegenden Erfindung ein einziges Lagermittel im Bereich der Welle, z.B. die Lagerbuchse, statt zwei beabstandeten Lagermitteln eingesetzt.

Vorteilhaft weist die Lagerbuchse zumindest ein Fluidleitungssegment, vorzugsweise mehrere Fluidsegmente, zur Überleitung einer Temperierflüssigkeit zwischen rotierbar- gelagerten und starren Bauteilen des Werkzeugelements auf. Beim Spritzgießen muss zur Erstarrung der Kunststoff-Schmelze Wärme aus der Kavität abgeführt werden. Durch die Temperierung wird eine schnelle Wärmeabfuhr ermöglicht und zugleich eine homogene Verteilung der Temperatur über die starre Grundplatte hinweg in die rotierenden Bauteile. Die Temperierung, insbesondere die Kühlung, ist bei dieser Fluidführung besonders effektiv.

Das Fluidleitungssegment der Lagerbuchse kann als ein zumindest bereichsweise um die Rotationsachse umlaufendes Fluidleitungssegment innerhalb der Lagerbuchse ausgebildet sein.

Alternativ kann das Fluidleitungssegment auch im Zusammenspiel mit feststehenden Elementen des Drehtellers, insbesondere der Welle, ausgebildet sein. Es können auch mehrere Fluidleitungssegmente auf diese Art und Weise vorgesehen sein.

Das Fluidleitungssegment der Lagerbuchse kann zudem zumindest bereichsweise als ein parallel zur Rotationsachse verlaufendes Fluidleitungssegment innerhalb der Lagerbuchse oder im Zusammenspiel mit feststehenden Elementen des Drehtellers, insbesondere der Welle, ausgebildet sein.

Weiterhin kann die Lagerbuchse zumindest eine Dichtebene aufweisen. Eine Dichtebene kann z.B. durch einen Dichtring ausgebildet werden. Besonders bevorzugt ist die Dichtebene senkrecht zur Rotationsachse ausgebildet.

Besonders bevorzugt sind mehrere Dichtebenen, insbesondere zumindest eine oberhalb und unterhalb und insbesondere auch zwischen dem oder den umlaufenden Fluidleitungssegmenten angeordnet. Dadurch wird die Leckage bei der Durchleitung minimiert.

Eines oder mehrere Fluidleitungssegmente können zudem in der Welle angeordnet sein. Somit kann die Einleitung der Temperierflüssigkeit von der Grundplatte über die Welle und die Lagerbuchse in die Drehplatte erfolgen.

Die Welle kann insbesondere verschraubt und verstiftet mit der Grundplatte verbunden sein. Durch die Verstiftung werden passgenaue Übergabepunkte erreicht.

Die Drehplatte kann eine umlaufende Verzahnung aufweisen. Der Drehteller kann zudem einen rotativen Antrieb, vorzugsweise unter Eingriff in eine umlaufende Verzahnung der Drehplatte, aufweisen.

Der rotative Antrieb kann ein Zahnradgetriebe zwischen einer Antriebseinheit, insbesondere einem Motor, und der Verzahnung aufweisen.

Die Drehplatte kann zudem eine Verzahnungs-Abdeckung aufweisen zur zumindest bereichsweisen Abdeckung der Verzahnung der Drehplatte mit dem rotativen Antrieb aufweist. Die Abdeckung kann insbesondere mehrteilig ausgebildet sein. Besonders bevorzugt ist die Abdeckung der Verzahnung vollständig umlaufend um einen möglichst effizienten Arbeitsschutz, Reinraumtauglichkeit und Sauberkeit zu erhalten.

Weiterhin kann der Drehteller einen Niederhalter aufweisen, zur Verringerung und/oder Verhinderung der Axialverschiebung der Drehplatte entlang der Rotationsachse. Damit wird ein Abheben von der Grundplatte verhindert.

Der Niederhalter kann als Teil der Verzahnungsabdeckung ausgebildet sein, wobei ein weiterer Teil der Verzahnungsabdeckung als eine plattenförmige Zahnkranzabdeckung ausgebildet ist. Dadurch wird eine geringere Bauteil-Anzahl und ein besonders kompakter Aufbau des Drehtellers erreicht.

Weiterhin kann der Niederhalter zumindest eine Niederhalterrolle, vorzugsweise mehrere rotierbar-gelagerte Niederhalterrollen, aufweisen. Besonders bevorzugt können die Niederhalterolle oder Niederhalterollen jeweils eine Rotationsachse senkrecht zur Rotationsachse der Drehplatte aufweisen.

Vorteilhaft können die mit der Drehplatte verbundenen Formeinsätze und die darin vorgesehenen Kavitäten durch Rotation um 180°, 120° und/oder 90° in Deckung zueinander gebracht werden können. Der Begriff "Deckung" bezieht sich auf die Position der Formeinsätze, z.B. Ausnehmungen oder Vorsprünge, auf der Drehplatte. Allerdings sind die Kavitäten selbst nicht zwingend formgleich. Anders ausgedrückt, sind die Kavitäten der festen und beweglichen Werkzeugteile in jeder Rotationsgrundstellung passgenau zur Bildung eines Hohlraums drehbar und schließbar.

Besonders bevorzugt sind zumindest zwei Formeinsätze, vorzugsweise des festen Werkzeugteils, hinsichtlich ihrer Kavitäten verschieden, insbesondere formverschieden, zueinander ausgebildet. Somit kann in einem ersten von einer ersten Kavität gebildeten Hohlraum eine erste Schicht eines ersten Kunststoffs mit einer ersten Höhe ausgebildet werden und anschließend nach Drehen eine weitere Schicht eines zweiten Kunststoffs mit einer zweiten Höhe in einem zweiten durch eine zweite Kavität gebildeten Hohlraum aufgetragen werden.

Die Grundplatte und der Drehteller können vorteilhaft zudem jeweils Pneumatikleitungen aufweisen, welche durch Rotation, insbesondere in einer Feststellposition, in Deckung zueinander bringbar sind. Dadurch wird eine Überleitung von Druckluft zwischen den bewegten und starren Bauteilen des Werkzeugelements möglich, z.B. um eine Auswerfereinheit zu betätigen.

Weiterhin können die Grundplatte und der Drehteller einen Riegelmechanismus, insbesondere ein linearverschiebbares Element und eine Ausnehmung zur Aufnahme des Elements aufweisen. Dabei ist über den Riegelmechanismus die Bewegung des Drehtellers gegenüber der Grundplatte in einer Feststellposition feststellbar.

Vorteilhaft ist die Drehplatte auf einer oder mehreren Gleitplatten gelagert ist, welche vorzugsweise in der Grundplatte eingelassen sind.

Zwischen der Grundplatte und der mitdrehenden Lagerbuchse kann zudem in einer Variante der vorliegenden Erfindung ein weiteres ringförmiges Lager, insbesondere ein Gleitlager oder ein Wälzkörperlager, so z.B. ein Nadellager, angeordnet sein.

Die Lagerbuchse kann insbesondere eine Axialeinleitung und eine Axialausleitung der Temperierflüssigkeit in die Lagerbuchse, sowie eine Umleitung der Temperierflüssigkeit in Spiral- und/oder Ringbahnen aufweisen. Insbesondere die vorgenannten Fluidleitungssegmente können Teil dieser Umleitung sein.

Weiterhin kann sowohl die Grundplatte als auch die Drehplatte zumindest jeweils eine Durchgangsbohrung zur Durchführung eines Druckbolzens, vorzugsweise einschließlich des jeweiligen Druckbolzens, aufweist, wobei die Durchgangsbohrungen durch Rotation, insbesondere in einer Feststellposition, in Deckung zueinander bringbar sind.

Die erfindungsgemäße Spritzgießvorrichtung kann zum Mehrkomponenten-Spritzgießen ausgebildet sein. Es umfasst den Drehteller, das erste bewegliche Werkzeugteil und das zweite feste Werkzeugteil. Der Drehteller und das bewegliche Werkzeugteil bilden die bewegliche Baugruppe. Das feste Werkzeugteil ist mit zwei oder mehr Schmelzezuleitungen für den Anschluss von zwei Plastifizieraggregaten zum Einleiten zweier vorzugsweise unterschiedlicher Kunststoffschmelzen ausgebildet. Hierdurch kann ein Mehrkomponenten-Spritzguss realisiert werden.

Die Anschlüsse können insbesondere derart angeordnet sein, dass ein Einleiten der Kunststoffschmelzen aus zwei unterschiedlichen Raumrichtungen erfolgt.

Weiterhin erfindungsgemäß ist die Verwendung der erfindungsgemäßen SpritzgussVorrichtung zur Ausführung eines Mehrkomponenten-Spritzguss-Verfahrens.

Nachfolgend wird die Erfindung im Detail anhand eines Ausführungsbeispiels und unter Zuhilfenahme der nachfolgenden Figuren näher erläutert. Es zeigen:
- Fig. 1: eine Schnittdarstellung durch eine erste erfindungsgemäße Variante eines Werkzeugs;
- Fig. 2: ein vergrößerter Teilbereich der Fig. 1; und
- Fig. 3: eine Schnittebene senkrecht zu Fig. 1, welche eine Draufsicht auf einen Drehteller ermöglicht.

Spritzgusswerkzeuge bzw. Spritzgussvorrichtungen können mehrteilig hergestellt werden. Dabei unterscheidet man zumeist zwischen zumindest zwei Werkzeugteilen, der sogenannten beweglichen Auswerferseite und die feststehende Düsenseite. Nach erfolgtem Spritzguss und Erstarren des spritzgegossenen Formteils in einem aus Kavitäten der beiden Werkzeugteile gebildeten Hohlraum, werden diese beiden Werkzeughälften auseinandergefahren. Das Formteil verbleibt in der Regel jedoch in der Kavität der Auswerferseite bis es durch eine Auswerfervorrichtung von der Auswerferseite getrennt wird. Es sind sowohl Etagenwerkzeuge als auch Eintrennebenen-Werkzeuge bekannt.

Derartige Vorrichtungen werden bereits seit vielen Jahren realisiert. Zum Verständnis einzelner Bauteil eines Werkzeuges der Spritzgusstechnik wird auf das Fachbuch Mink, Walter, Grundzüge der Spritzgießtechnik, 5.Auflage, 1979, insbesondere S.539 bis 542, Zechner & Hünthig Verlag Speyer*,* verwiesen, auf welches im Rahmen der vorliegenden Erfindung vollumfänglich Bezug genommen wird.

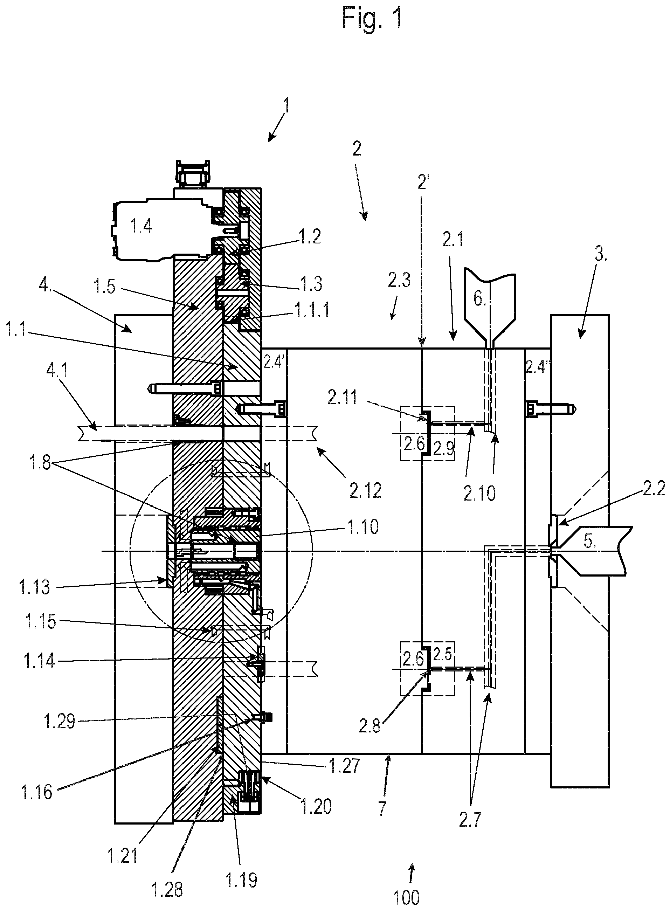

Fig. 1 zeigt eine erste Variante einer Spritzgießvorrichtung 100 zum Spritzgießen von Kunststoffteilen. Die Spritzgießvorrichtung 100 ist in dieser Variante als Eintrennebenen-Werkzeug ausgebildet mit einem ersten Werkzeugteil 2.3 als Auswerferseite und einem zweiten Werkzeugteil 2.1 als Düsenseite.

Beim Bereitstellen von zwei formgleicher Auswerferseiten und einer entsprechenden Umgestaltung der Düsenseite mit Ausgabedüsen auf zwei Ebenen kann das Werkzeug auch als Etagenwerkzeug ausgebildet sein.

Das Werkzeug 2 weist einen Trennebene 2' zwischen den beiden Werkzeugelementen 2.1 und 2.3 auf.

Das düsenseitige Werkzeugelement 2.1 kann vielfältig ausgebildet sein. Insbesondere kann die Zuführgeometrie der Kunststoffschmelze auch auf andere Art und Weise erfolgen. Die dargestellte Variante stellt allerdings eine besonders bevorzugte Variante zur Realisierung eines Mehrkomponenten-Spritzgießlings und eines Mehrkomponenten Spritzgießverfahrens innerhalb der erfindungsgemäßen Spritzgießvorrichtung dar. Hierbei gilt zu berücksichtigen, dass zwei Plastifizier-Aggregate, mit je einem und weiteren Bauteilen benötigt werden, so dass unter Berücksichtigung des Raumbedarfs die Zuführung der Kunststoffschmelze zur Spritzgießvorrichtung vorzugsweise aus unterschiedlichen Raumrichtungen und insbesondere nicht in paralleler Ausrichtung erfolgt.

Bei Kunststoffschmelzen gleicher Zusammensetzung, auch dieser Fall ist im Rahmen des vorliegenden Falls möglich, kann eine parallele Zuführung vorteilhaft erfolgen, so dass nur ein Plastifizier-Aggregat benötigt wird.

Das düsenseitige Werkzeugteil 2.1 kann eine feststehende Maschinen-Aufspannplatte 3 aufweisen, welche an eine Werkzeug-Aufspannplatte 2.4" des düsenseitigen Werkzeugteils 2.1 angeschlossen ist.

Die Grundplatte 1.5 kann einen Zentrierring 1.13 für eine Zentrierung der beweglichen Baugruppe zur beweglichen Maschinenplatte 4. aufweisen. Anders als Varianten mit großen Zentrierringbohrungen innerhalb der Maschinenplatte und entsprechend groß-ausgeformten Zentrierringen, welche zur Schwächung der Konstruktion und somit zu hohen Verformungen führen, ist die Bohrung für die Welle und die Lagerbuchse als auch der Zentrierring vergleichsweise klein ausgebildet. Dies verringert den Verschleiß und die Prozessfehler.

Das düsenseitige Werkzeugteil 2.1 weist eine erste Anschlussöffnung zum Anschluss einer Düse eines ersten Plastifizier-Aggregats 5 auf, derart, dass eine Einleitung von flüssigem Kunststoff aus dem Plastifizier-Aggregat 5 senkrecht zur Trennebene 2 erfolgen kann.

Ausgehend von der Anschlussöffnung verläuft ein erstes Schmelzeleitsystem 2.7 durch das feste Werkzeugteil 2.1 zur Leitung einer ersten Kunststoffkomponente zur ersten Kavität 2.5. Die Leitung der ersten Kunststoffschmelze durch das Schmelzeleitsystem 2.7 erfolgt von einer zentralen Position der ersten Anschlussöffnung zu einer dezentralen Position im Bereich des ersten kavitätsbildenden Elements 2.5. Die zentrale Position definiert sich anhand der Längsachse A der Spritzgussvorrichtung 100, die senkrecht zur Trennebene 2 verläuft.

Das düsenseitige Werkzeugteil 2.1 weist eine zweite Anschlussöffnung zum Anschluss einer Düse eines zweiten Plastifizier-Aggregats 6 auf, derart, dass eine Einleitung von flüssigem Kunststoff aus dem Plastifizier-Aggregat 5 schräg, insbesondere senkrecht zur Einspritzrichtung des ersten Plastifizier-Aggregats 5 erfolgen kann. Die zweite Anschlussöffnung kann an oder in dem Werkzeugteil 2.1 angeordnet sein.

Ein zweites Schmelzeleitsystem 2.10 verläuft durch ausgehend von der zweiten Anschlussöffnung schräg in dem Werkzeugteils 2.1, vorzugsweise in dem Formeinsatz, und sodann parallel zur Längsachse A bis hin zu einer dezentralen Position eines zweiten kavitätsbildenden Elements 2.9. Die Kavitäten 2.5 und 2.9 sind dabei vorzugsweise um den gleichen Abstand von der Längsachse A entfernt. Sie können einstückig in einem Formeinsatz ausgebildet sein.

Die Kavitäten 2.5 bzw. 2.9 dienen der Ausbildung eines Hohlraums in Zusammenspiel mit jeweils einen Kavitäten 2.6 des auswerferseitigen Werkzeugteils 2.3 auf. Die jeweiligen Formhälften 2.1 und 2.3 können einteilig oder auch vorzugsweise mehrteilig mit Form-Teileinsätzen ausgebildet sein.

An der Kavität 2.5 kann die erste Komponente eines Spritzgusselements eingeleitet werden und an der Kavität 2.9 kann die zweite Komponente eines Spritzgusselements eingeleitet werden. Dadurch ist ein 2K-Spritzgusssystem realisiert, wobei die effiziente Herstellung bei geringen Zykluszeiten durch den Wechsel der Positionen des Spritzgießlings innerhalb des Werkzeugs ermöglicht wird.

Das düsenseitige Werkzeugteil 2.1 ist vorzugsweise feststehend, wohingegen das auswerferseitige Werkzeugteil 2.3 beweglich, insbesondere linear beweglich, ausgebildet ist, so dass sich ein Spalt an der Trennebene 2' zur Ausgabe eines Spritzgießling aus der Kavität durch ein Verfahren des auswerferseitigen Werkzeugteils bilden kann.

Vielfältige andere Ausgestaltungsvarianten und Abwandlungen des düsenseitigen Werkzeugelements sind im Rahmen der vorliegenden Erfindung realisierbar.

Ein auswerferseitiges Werkzeugelement 2.3 weist, wie zuvor erörtert, einen Formeinsatz mit zumindest zwei Kavitäten 2.6 auf. Diese sind vorzugsweise im gleichen Abstand zur Längsachse A voneinander entfernt.

Die Werkzeugteile 2.1 und 2.3 können u.a. Temperiermittel, so z.B. Temperierkanäle, Formenkerne und/oder dergleichen aufweisen.

Ein Entformungsmechanismus, so z.B. ein Auswerferpaket, kann in diesem Werkzeugteil vorhanden sein und ist aus Gründen der Übersichtlichkeit nicht dargestellt. Alternativ kann ein Auswurf eines Spritzgießlings auch durch eine Luftdüse, welche in der Kavität mündet, erreicht werden. Ein typisches Auswerferpaket für den vorliegenden Einsatz ist z.B. in der WO 2021/121977 A1 dargestellt und beschrieben.

Der Entformungsmechanismus kann über einen ersten Druckbolzen 2.12 betätigt werden, wie er in Fig. 1 dargestellt ist. Auf diesen ersten Druckbolzen 2.12 wirkt ein maschinenseitiger zweiter Druckbolzen 4.1, welcher analog zum Druckbolzen 2.12 linear verschieblich parallel zur Längsachse A angeordnet ist und über eine Führungsbuchse 1.8 beweglich gelagert ist. Im beweglichen Werkzeugteil 2.3 sind mindestens zwei Auswerfer Pakete eingebaut. Jeder Spritzstation ist mindestens ein unabhängig betätigbares Paket zugeordnet. Hierdurch ist gewährleistet, dass bei Betätigung der Druckbolzen nur der Entformungsmechanismus der Fertigspritzstation betätigt wird. Die Vorspritzlinge dürfen nicht entformt werden.

Der Formeinsatz 2.3 ist über eine optionale Werkzeugaufspannplatte 2.4' mechanisch fest mit einem Drehteller 1 verbunden. Der Drehteller 1 umfasst eine rotierbar gelagerte Drehplatte 1.1 und eine Antriebseinheit 1.4 zum rotativen Antrieb der Drehplatte 1.1, z.B. durch einen Direktantrieb. Die Drehplatte 1.1 weist eine umfangsverteile Verzahnung 1.1.1 auf. Der Drehteller 1 und das bewegliche Werkzeugteil 2.3 bilden eine bewegliche Baugruppe 400.

Der Antrieb weist eine Antriebseinheit 1.4, z.B. einen Hydromotor oder einen Servoantrieb mit Getriebe auf. Weiterhin weist die Antriebseinheit 1.4 ein Zahnradgetriebe mit zumindest einem Zahnrad auf, welches im vorliegenden Fall aus einer Abfolge von zwei Zahnrädern 1.2 und 1.3 besteht. Das Zahngetriebe greift in die Verzahnung des Drehtellers 1 ein.

Auch andere Antriebsvarianten sind möglich, so kann z.B. ein Umschlingungsgetriebe um die Drehplatte 1.1 angeordnet sein oder ein Reibrad am Umfang der Drehplatte 1.1 angreifen. Aufgrund der optimalen Kraftübertragung bei genauer Positionierung des Drehtellers bietet sich allerdings der Antrieb über den Eingriff des Antriebs in die Verzahnung 1.1.1 besonders bevorzugt an.

Die Drehplatte 1.1 weist eine erste Plattenfläche 1.27 auf, an welcher die Werkzeug-Aufspannplatte 2.4' festgelegt ist. Mit der gegenüberliegenden zweiten Plattenfläche 1.28 liegt die Drehplatte 1.1 auf plattenförmigen Gleitlagern 1.21 auf. Diese Gleitlager 1.21 sind in Grundplatte 1.5 eingelassen oder an einer Grundplatte 1.5 angeordnet.

Bevorzugt kann es sich um selbstschmierende Lager, z.B. Bronze mit Graphit, handeln. Die Grundplatte 1.5 grenzt somit unmittelbar an die Drehplatte 1.1 an. Die Grundplatte 1.5 ist dabei starr angeordnet, so dass die rotierbar-gelagerte Drehplatte 1.1 gegenüber der Grundplatte 1.5 beweglich, insbesondere verdrehbar, gelagert ist.

Randseitig ist die Drehplatte 1.1 gestuft ausgebildet. Die Verzahnung 1.1.1 steht dabei vom Rand der Drehplatte 1.1 in radialer Richtung hervor. Der Verzahnungsbereich mit der Verzahnung 1.1.1 bildet dabei einen radial nach außen hervorstehenden Stufenvorsprung 1.29 am Rand der Drehplatte 1.1 aus.

Demgegenüber liegt ein Niederhalter 1.19 auf der Stufe 1.29 auf, welcher ein Abheben der Drehplatte 1.1 gegenüber der Grundplatte 1.5 verhindert. Der Niederhalter 1.19 übergreift die Verzahnung 1.1.1 der Drehplatte 1.1 randseitig. Die Übergreifung durch den Niederhalter 1.19 erfolgt vorzugsweise derart, dass der Niederhalter 1.19 zumindest bereichsweise in dem gestuften Bereich des Randes der Drehplatte 1.1 einliegt, so dass die Verzahnung 1.1.1 überdeckt ist und vor Schmutz und mechanischer Schädigung geschützt ist. Daher empfiehlt sich vorteilhaft eine umlaufende Übergreifung der Drehplatte 1.1 durch den Niederhalter 1.19.

Der Niederhalter 1.19 schließt vorteilhaft und bevorzugt bündig mit der ersten Plattenfläche 1.27 ab. Der Niederhalter 1.19 kann umfangsverteilt vorteilhaft eine oder vorzugsweise mehrere Laufrollen 1.20 aufweisen, welche als übergreifender Teil des Niederhalters 1.19 ausgebildet sind und auf der Stufe 1.29 abrollen. Da das Gewicht der Werkzeugteile 2.1 und 2.3 sehr hoch ist, kann dies zu einem Kippmoment der Drehplatte führen. Dieses Moment wird zusätzlich durch die Niederhalter 1.19 auffangen.

Wie aus der Fig. 1 ohne weiteres erkennbar ist, liegen die Stirnflächen der Bolzen 4.1 und 2.12 in einer Stopp-Position des Drehtellers 1 übereinander. Zur Zentrierung der Werkzeugaufspannplatte 2.4' weist die Drehplatte 1.1 eine Nut mit einem Nutenstein 1.14 auf, welcher aus der ersten Plattenfläche 1.27 hervorsteht und welcher in eine korrespondierende Nut des Formeinsatzes 2.3 und/oder der Werkzeugaufspannplatte 2.4' eingreift.

Fig. 1 zeigt den Drehteller 1 in einer vordefinierten Stopp-Position gegenüber der Grundplatte 1.5. In dieser Position bildet die Grundplatte 1.5 mit der Drehplatte 1.1 und weiteren darauf angeordneten mitdrehenden Elementen 2.4' und 2.3 eine gemeinsame Pneumatikleitung 1.15 aus.

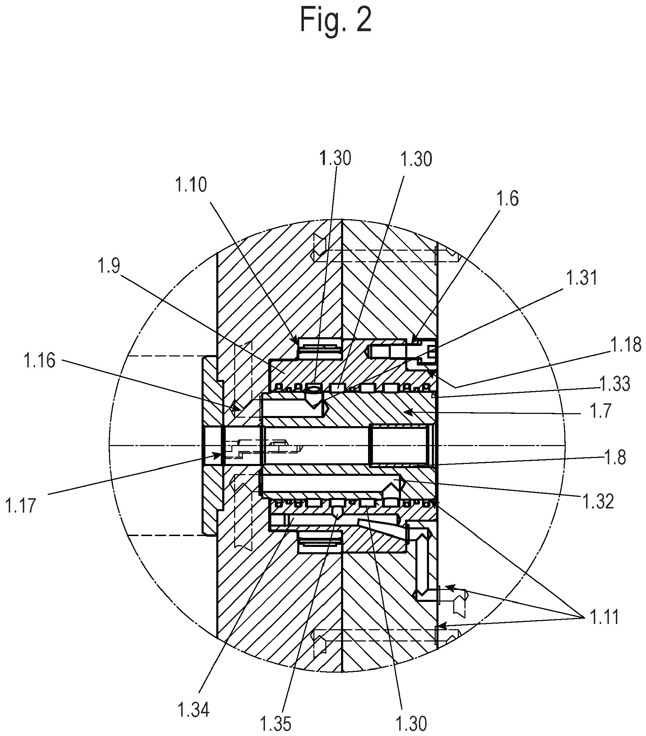

Auch die Ausbildung einer gemeinsamen Temperierfluid-Leitung zur Durchleitung eines Temperierfluids, z.B. eine Heiz- oder Kühlfluids, zwischen der Grundplatte 1.5 und den rotierbaren Elementen des Drehtellers 1 wird in der jeder Drehlage ermöglicht und soll anhand von Fig. 2 näher beschrieben werden.

Fig. 2 zeigt eine an der Drehplatte 1.1 festgelegte mitdrehende hohlzylindrische Lagerbuchse 1.9. Diese Lagerbuchse ist ebenfalls Teil des Drehtellers 1. Die hohlzylindrische Lagerbuchse 1.9 weist eine oder mehrere innenseitige umlaufende Dichtelemente 1.11 z.B. in Form von Ringnuten in welchen eine Dichtflüssigkeit angeordnet ist oder ein Dichtring einliegt.

Die umlaufenden Dichtelemente 1.11 können der Dichtung des Lagers 1.9 und der Drehplatte 1.1 gegenüber einer im Innenhohlraum der Lagerbuchse 1.9 angeordneten Welle 1.7 dienen. Diese Welle 1.7 ist starr mit der Grundplatte 1.5 verbunden.

Bevorzugt erfolgt die Verbindung der Welle 1.7 mit der Grundplatte 1.5 über eine Kombination aus einer Verstiftung und Verschraubung 1.17. Dabei dient die Verstiftung einer Vorpositionierung und Vorzentrierung der Welle 1.7 und die Verschraubung der endgültigen Fixierung der Welle 1.7.

Weiterhin weist die hohlzylindrische Lagerbuchse 1.9 zumindest eine oder mehrere umlaufende Fluidleitungssegmente 1.30 einer Fluidleitung 1.16 zur Überführung einer Temperierflüssigkeit zwischen der Grundplatte 1.5 durch den Drehteller 1 bis in die auf dem rotierbar-gelagerten Drehteller angeordneten Bauteile des Werkzeugelements 2.3.

Die umlaufende Fluidleitungssegmente 1.30, welche beispielsweise ring- oder spiralförmig am Zylinderinnenumfang der Lagerbuchse 1.9 angeordnet sind, ermöglichen zugleich die Temperierung, insbesondere die Kühlung der Lagerbuchse 1.9 und der Welle 1.7.

In der Welle 1.7 verlaufen über einen Teilbereich in axialer Richtung zumindest zwei Fluidleitungssegmente 1.31 und 1.32, wobei die Axialerstreckung der Fluidleitungssegmente 1.31 und 1.32 unterschiedlich lang ist, so dass ein Vor- und ein Rücklauf zur Bildung eines Temperier-Kreislaufes gebildet wird. Ein erstes Fluidleitungssegment 1.31 dient der Zuleitung der Temperierflüssigkeit in das oder die umlaufenden Fluidleitungssegmente 1.30 und ein zweites Fluidleitungssegment 1.32 dient der Ableitung der Temperierflüssigkeit aus dem oder den umlaufenden Fluidleitungssegmenten 1.30.

Die Welle 1.7 ist vorzugsweise als Hohlwelle ausgebildet. Die Verstiftung greift als Zentrierstift in eine im Hohlraum der Welle 1.7 angeordneten Führungsbuchse 1.8 ein. Eine Verschraubung erfolgt sodann durch eine Innenschraube unter Fixierung des Zentrierstifts in seiner Endposition. In der Figur sind Stift und Schraube jeweils in einer anderen Ebene dargestellt.

Weiterhin in der Figur erkennbar, ist ein Zentrierring 2.2, welcher zur Zentrierung des festen Werkzeugteils 2.1 zur festen Maschinen-Aufspannplatte 3. dient.

Zwischen der Lagerbuchse 1.9 und der Grundplatte 1.5 ist ein Lager 1.10 angeordnet, zur beweglichen, insbesondere drehbaren, Lagerung der Lagerbuchse 1.9 gegenüber der Grundplatte 1.5.

Durch die direkte Anordnung des Lagers 1.10 neben der Drehplatte und der Einpassung der Lagerbuchse in die Drehplatte werden Biegemomente innerhalb der Lagerbuchse vermieden bzw. auf ein Minimum gehalten

In Fig. 2 ist zudem die Schnittstelle 1.33 zwischen drehbaren und nicht-drehbaren Teilen des Werkzeugteils 2.3 dargestellt. Diese Schnittstellen 1.33 ist an verschiedenen Ebenen entlang der Längsachse A durch die Dichtelemente 1.11 gegen einen Austritt der Temperierflüssigkeit abgedichtet.

In der Lagerbuchse 1.9 ist ebenfalls mindestens ein Fluidleitungssegment 1.34 angeordnet, welches vorzugsweise parallel zur Längsachse A verläuft. Diese Längsachse A der Spritzgießvorrichtung 100 ist zugleich auch als die Rotationsachse des Drehtellers 1 ausgebildet.

Das Fluidleitungssegment 1.34 ermöglicht die Weitergabe der Temperierflüssigkeit von der Lagerbuchse 1.9 zur Drehplatte 1.1. Innerhalb der Lagerplatte setzt sich die Fluidleitung bis in die Werkzeug-Aufspannplatte 2.4' oder zu den Temperier-Anschlüssen 1.25 fort. Eine Überleitung 1.35 der Temperierflüssigkeit in das Fluidleitungssegment 1.34 erfolgt korrespondierend zu jeweils zugeordneten Fluidleitungssegment 1.30. In der dargestellten Variante gibt es insbesondere jeweils zwei Vorund Rückläufe. Dadurch werden zwei Temperierkreisläufe gebildet.

Die Lagerbuchse 1.9 weist mindestens eine Bohrung 1.6 auf, welche über eine Schraube 1.18 oder eine andere Fixierung mit der Lagerplatte 1.1 fest verbunden ist.

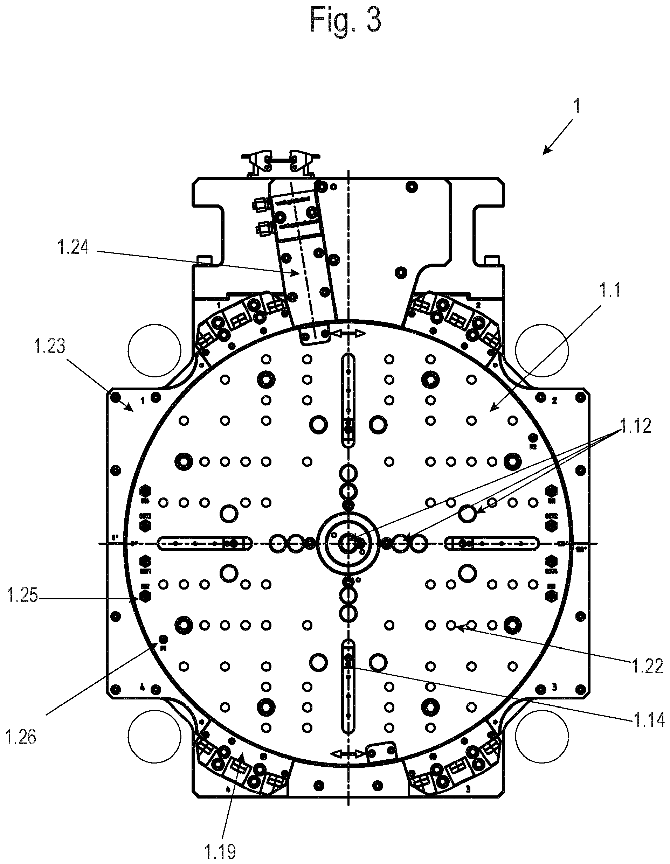

Fig. 3 zeigt die Drehplatte 1.1 in der Draufsicht. Sie weist u.a. Verschraubungspunkte 1.22 zur Verbindung der Drehplatte mit den aufgesetzten durch die Drehplatte 1 drehbar-gelagerte Werkzeugelemente, wie z.B. die Werkzeug-Aufspannplatte 2.4 des Werkzeugteils 2.3.

Jenseits der Niederhalter 1.19 weist das Werkzeugteil 2.3 eine plattenförmige Zahnkranzabdeckung 1.23 auf, welche die Verzahnung 1.1.1 der Lagerplatte 1.1 und das Getriebe vor Verschmutzung und mechanischer Schädigung schützt und die Arbeitssicherheit erhöht.

Weiterhin kann die Rotationsstellung des Drehtellers 1.1 durch einen linear-beweglichen Verriegelungsmechanismus 1.24 festgestellt werden. Der Verriegelungsmechanismus ist an oder auf der Grundplatte 1.5 und ermöglicht eine Verschiebung eines Riegelelements in eine Nut des Drehtellers 1.1.

Darüber hinaus weist der Drehteller einen nicht dargestellten Temperieranschluss zur Einleitung von Temperierflüssigkeit in die Grundplatte 1.5 auf und einen nicht dargestellten Luftanschluss zur Realisierung eines Pneumatikmechanismus auf. Die Luft-Anschlüsse werden bei Überdecken von Pneumatikleitungen der Grundplatte und Drehplatte in Spritzstellung wirksam.

Die Temperierung kann direkt von der Drehplatte zur Werkzeugaufspannplatte des beweglichen Werkzeugteil übergeben werden. Vorzugsweise sind jedoch die Temperieranschlüsse 1.25 mit der jeweils zugehörigen Fluidleitung 1.16 verbunden. Durch eine Schlauchverbindung sind die Temperieranschlüsse vorzugsweise trennbar ausgebildet. Durch die Schlauchverbindung kann an beliebigen Stellen das Temperiermittel dem beweglichen Werkzeugteil zugeführt bzw. abgeführt werden. Das reduziert in der Regel die Fließlänge und die Anzahl von Umlenkungen. Das wiederum reduziert den hydraulischen Widerstand und erhöht somit den Durchfluss und die Temperierwirkung.

Schließlich ist auf der dem Drehteller 1.1 abgewandten Seite der Grundplatte 1.5 eine linear-bewegliche Maschinenaufspannplatte 4 angeordnet.

### Bezugszeichenliste

- 1: Drehteller
- 1.1: Drehplatte
- 1.1.1: Verzahnung
- 1.2: Zahnrad 1
- 1.3: Zahnrad 2
- 1.4: Hydromotor oder Servo-Antrieb mit Getriebe
- 1.5: Grundplatte
- 1.6: Bohrung
- 1.7: Welle
- 1.8: Führungsbuchse
- 1.9: Lagerbuchse
- 1.10: Lager
- 1.11: Dichtungselemente

- 1.12: Bohrung für: Druckbolzen, optional Pneumatik
- 1.13: Zentrierring
- 1.14: Nutensteine (Zentrierung)
- 1.15: Pneumatikleitung
- 1.16: Temperierungsleitung
- 1.17: Verschraubung und Stift der Übergabe Welle
- 1.18: Schraube
- 1.19: Niederhalter
- 1.20: Laufrolle
- 1.21: Gleitplatte
- 1.22: Verschraubungs-Punkte (Werkzeug)
- 1.23: Zahnkranzabdeckung
- 1.24: Verriegelung (Hydromotor-Ausführung)
- 1.25: Temperieranschluss
- 1.26: Luftanschluss
- 1.27: Plattenfläche
- 1.28: Plattenfläche
- 1.29: Stufe / Stufenvorsprung
- 1.30: Fluidleitungssegmente
- 1.31: Fluidleitungssegmente
- 1.32: Fluidleitungssegmente
- 1.33: Schnittstelle - fest/rotativ
- 1.34: Fluidleitungssegment
- 1.35: Überleitung

- 2.: Werkzeug
- 2.': Trennebene
- 2.1: festes Werkzeugteil
- 2.2: Zentrierring festes Werkzeugteil
- 2.3: bewegliches Werkzeugteil
- 2.4`: Werkzeugaufspannplatte bewegliches Werkzeugteil
- 2.4": Werkzeugaufspannplatte festes Werkzeugteil
- 2.5: kavitätsbildendes Element - feste Seite 1K
- 2.6: Formeinsatz bewegliche Seite 1K & 2K
- 2.7: Schmelze-Leitsystem 1K
- 2.8: Kavität 1K / Vorspritzkörper
- 2.9: kavitätsbildendes Element - feste Seite 2K
- 2.10: Schmelze-Leitsystem 2K
- 2.11: Kavität 2K / Fertigspritzkörper
- 2.12: Druckbolzen / Bohrung (verbunden mit Entformungsmechanismus)
- 3: Feste Maschinen-Aufspannplatte
- 4: Bewegliche Maschinen-Aufspannplatte
- 4.1: Druckbolzen (Maschinenauswerfer)
- 5: Plastifizier Aggregat 1K
- 6: Plastifizier Aggregat 2K
- 7: Formrahmen

- 100: Spritzgießvorrichtung
- 400: bewegliche Baugruppe
- A: Längsachse / Rotationsachse

## Patentansprüche

1. Spritzgießvorrichtung (100) mit einem Drehteller (1), einem festen und einem beweglichen Werkzeugteil (2.1 und 2.3), wobei der Drehteller (1) und das bewegliche Werkzeugteil (2.3) als bewegliche Baugruppe (400) gegenüber dem festen Werkzeugteil (2.1) verfahrbar, insbesondere linear verfahrbar, ausgebildet ist,
wobei der Drehteller (1) zudem eine Grundplatte (1.5) aufweist, und
wobei der Drehteller (1) eine Drehplatte (1.1) aufweist, welche gegenüber der Grundplatte (1.5), über eine Welle (1.7) wirkverbunden und drehbar gelagert ist **dadurch gekennzeichnet, dass,** die Länge der Welle (1.7) kürzer ist als die Stärke von Grund- und Drehplatte (1.5 und 1.1) zusammen,
wobei der Drehteller (1) eine Vorrichtung zur Temperiermittelübergabe zwischen der Drehplatte (1.1) und der Grundplatte (1.5) aufweist, welche die Abmessungen des Drehtellers (1) nicht überragt und
wobei die Vorrichtung zur Temperiermittelübergabe die Welle (1.7) und eine Lagerbuchse (1.9) umfasst.

2. Spritzgießvorrichtung nach Anspruch 1, **dadurch gekennzeichnet, dass** die Lagerbuchse (1.9) als eine mit der Drehplatte (1.1) mitdrehende Lagerbuchse (1.9) ausgebildet ist.

3. Spritzgießvorrichtung nach Anspruch 1 oder 2, **dadurch gekennzeichnet, dass** die Lagerbuchse zumindest ein Fluidleitungssegment (1.30, 1.34), vorzugsweise mehrere Fluidsegmente (1.30, 1.34), zur Überleitung von Temperierflüssigkeit zwischen rotierbar-gelagerten und starren Bauteilen des Drehtellers (1) aufweist, wobei besonders bevorzugt das Fluidleitungssegment (1.30) oder die Fluidsegmente (1.30) der Lagerbuchse (1.9) als ein zumindest bereichsweise um die Rotationsachse (A) umlaufendes Fluidleitungssegment (1.30) oder als mehrere zumindest bereichsweise umlaufende Fluidleitungssegmente (1.30) innerhalb der Lagerbuchse (1.9) oder im Zusammenspiel mit feststehenden Elementen des Drehtellers (1), insbesondere der Welle (1.7), ausgebildet ist oder sind.

4. Spritzgießvorrichtung nach einem der vorhergehenden Ansprüche, **dadurch gekennzeichnet, dass** das Fluidleitungssegment (1.34) oder die Fluidleitungssegmente (1.34) der Lagerbuchse (1.9) zumindest bereichsweise als ein parallel zur Rotationsachse (A) verlaufendes Fluidleitungssegment (1.34) oder mehrere parallel zur Rotationsachse (A) verlaufende Fluidleitungssegmente (1.34) innerhalb der Lagerbuchse (1.9) oder im Zusammenspiel mit feststehenden Elementen des Drehtellers (1), insbesondere der Welle 1.7), ausgebildet ist oder sind.

5. Spritzgießvorrichtung nach einem der vorhergehenden Ansprüche, **dadurch gekennzeichnet, dass** die Lagerbuchse (1.7) zumindest eine Dichtebene aufweist, insbesondere mehrere Dichtebenen oberhalb und unterhalb und insbesondere auch zwischen dem oder den umlaufenden Fluidleitungssegmenten (1.30) angeordnet ist oder sind.

6. Spritzgießvorrichtung nach einem der vorhergehenden Ansprüche, **dadurch gekennzeichnet, dass** die Drehplatte (1.1) eine umlaufende Verzahnung (1.1.1) aufweist, wobei der Drehteller (1) besonders bevorzugt einen rotativen Antrieb, vorzugsweise unter Eingriff in eine umlaufende Verzahnung (1.1.1) der Drehplatte (1.1), aufweist.

7. Spritzgießvorrichtung nach einem der vorhergehenden Ansprüche, **dadurch gekennzeichnet, dass** die Drehplatte (1.1) eine Verzahnungs-Abdeckung aufweist zur zumindest bereichsweisen Abdeckung der Verzahnung (1.1.1) der Drehplatte (1.1) mit dem rotativen Antrieb aufweist, wobei die Verzahnungs-Abdeckung vorzugsweise als umlaufende Abdeckung ausgebildet ist.

8. Spritzgießvorrichtung nach einem der vorhergehenden Ansprüche, **dadurch gekennzeichnet, dass** der Drehteller (1) einen Niederhalter (1.19) aufweist, zur Verringerung der Axialverschiebung der Drehplatte (1.1) entlang der Rotationsachse (A).

9. Spritzgießvorrichtung nach einem der vorhergehenden Ansprüche, **dadurch gekennzeichnet, dass** die Drehplatte mit Formeinsätze (2.5, 2.9) verbunden ist, die durch Rotation um 180°, 120° und/oder 90° in Deckung zueinander gebracht werden können, wobei die zumindest zwei Formeinsätze (2.5, 2.9) besonders bevorzugt verschieden, insbesondere formverschieden, ausgebildete Kavitäten aufweisen.

10. Spritzgießvorrichtung nach einem der vorhergehenden Ansprüche, **dadurch gekennzeichnet, dass** die Grundplatte (1.5) und der Drehteller (1) jeweils Pneumatikleitungen (1.15) aufweist, welche durch Rotation, insbesondere in einer Feststellposition, in Deckung zueinander bringbar sind.

11. Spritzgießvorrichtung nach einem der vorhergehenden Ansprüche, **dadurch gekennzeichnet, dass** die Grundplatte (1.5) und der Drehteller (1) einen Riegelmechanismus (1.24), insbesondere ein linearverschiebbares Element und eine Ausnehmung zur Aufnahme des Elements aufweist, wobei der Riegelmechanismus (1.24) die Bewegung des Drehtellers (1) gegenüber der Grundplatte (1.5) in einer Feststellposition feststellbar ist.

12. Spritzgießvorrichtung nach einem der vorhergehenden Ansprüche, **dadurch gekennzeichnet, dass** zwischen der Grundplatte (1.5) und der mitdrehenden Lagerbuchse (1.9) ein weiteres ringförmiges Lager (1.10), insbesondere ein Gleitlager, angeordnet ist, wobei die Lagerbuchse (1.9) besonders bevorzugt eine Axialeinleitung und eine Axialausleitung (1.34) der Temperierflüssigkeit in die Lagerbuchse (1.9) eine Umleitung (1.30) der Temperierflüssigkeit in Spiral-und/oder Ringbahnen aufweist.

13. Spritzgießvorrichtung nach einem der vorhergehenden Ansprüche, **dadurch gekennzeichnet, dass** die Zentrierung und Lagerung der Drehplatte (1.1) mittels des Lagers (1.10) und der Lagerhülse (1.9) in direkter Benachbarung erfolgt.

14. Spritzgießvorrichtung nach einem der vorhergehenden Ansprüche, **dadurch gekennzeichnet, dass** die Lagerbuchse (1.9) eine Axialeinleitung und eine Axialausleitung (1.34) der Temperierflüssigkeit in die Lagerbuchse (1.9) eine Umleitung (1.30) der Temperierflüssigkeit in Spiral- und/oder Ringbahnen aufweist.

15. Spritzgießvorrichtung nach einem der vorhergehenden Ansprüche, **dadurch gekennzeichnet, dass** sowohl die Grundplatte (1.5) als auch die Drehplatte (1.1) zumindest jeweils eine Durchgangsbohrung (1.12) zur Durchführung eines Druckbolzens (4.1, 2.12), vorzugsweise einschließlich des jeweiligen Druckbolzens (4.1, 2.12), aufweist, wobei die Durchgangsbohrungen durch Rotation, insbesondere in einer Feststellposition, in Deckung zueinander bringbar sind.

16. Spritzgießvorrichtung nach einem der vorhergehenden Ansprüche, **dadurch gekennzeichnet, dass** die Spritzgießvorrichtung ausgebildet ist zum Mehrkomponenten-Spritzgießen, wobei das feste Werkzeugteil (2.3) zwei oder mehr Schmelzezuleitungen (2.7, 2.10) für den Anschluss von zwei Plastifizieraggregaten (5, 6) zum Einleiten zweier unterschiedlicher Kunststoffschmelzen aufweist, wobei die Anschlüsse vorzugsweise derart angeordnet sind, dass ein Einleiten der Kunststoffschmelzen in das Werkzeugelement (2.3) aus zwei unterschiedlichen Raumrichtungen erfolgt.

17. Verwendung einer Spritzvorrichtung (100) nach einem der vorhergehenden Ansprüche zur Ausführung eines Mehrkomponenten-Spritzguss-Verfahrens.
